# DEMANDE DE BREVET EUROPEEN

(11) **EP 3 064 297 A1**
(43) Date de publication de la demande: **07.09.2016**
(21) Numéro de dépôt: 15157458.9
(22) Date de dépôt: 03.03.2015
(51) Int. Cl.: B23B 3/06, B23B 39/16, B23Q 39/02, B23Q 1/52, B23Q 1/62, B23Q 37/00

(54) **EQUIPEMENT À ACCESSOIRE AMOVIBLE ET ENSEMBLE POUR TOUR D'USINAGE, ET TOUR D'USINAGE À COMMANDE NUMÉRIQUE**

(71) Demandeur: Tornos SA, 2740 Moutier (CH)
(72) Inventeur: Theurillat, Marc, 2800 Delémont (CH)
(74) Mandataire: BOVARD AG

(57) **Abrégé**

Un équipement pour tour d'usinage à commande numérique comporte un chariot mobile (4), un système de support d'outil à entraînement intégré (5) monté à pivotement sur ce chariot mobile (4) de manière à pouvoir pivoter autour d'un axe de pivotement (B), ainsi qu'un dispositif d'actionnement du système de support d'outil à entraînement intégré (5) par rapport au chariot mobile (4). Le système de support d'outil à entraînement intégré (5) comporte au moins un emplacement de montage (105) pour recevoir de manière amovible un accessoire amovible (120) de support et d'entraînement d'un outil.

## Description

### Domaine technique de l'invention

La présente invention se rapporte au domaine de l'usinage au moyen d'un tour à commande numérique. Plus précisément, elle concerne un équipement et un ensemble pour tour d'usinage à commande numérique, ainsi qu'un tel tour d'usinage à commande numérique.

### État de la technique

Pour la plupart d'entre elles, les opérations d'usinage réalisées par un tour utilisent une mise en rotation de la matière à usiner par rapport à un outil, qui entame la matière passant devant lui du fait de cette mise en rotation.

Certaines formes ne peuvent pas être réalisées en procédant de la sorte. Tel est, par exemple, le cas des méplats latéraux ou des trous dont l'axe est incliné par rapport à l'axe de rotation de la broche de maintien et d'entraînement de la matière à usiner.

Un tour à commande numérique peut comporter un équipement additionnel grâce auquel, alors que la pièce en cours de fabrication est encore maintenue dans le tour, il est possible de réaliser sur cette pièce des trous inclinés ou des méplats latéraux ne pouvant pas être obtenus par un usinage nécessitant que la matière soit entraînée en rotation. Un tel équipement additionnel est généralement appelé « axe B » du fait qu'il s'y effectue un pivotement autour d'un axe lui-même également appelé « axe B ». Dans cet équipement, un chariot mobile porte un système de support d'outil à entraînement intégré. Ce système de support d'outil à entraînement intégré est pivotant et généralement pourvu de plusieurs outils tournants, dont chacun est toujours soit une fraise soit une mèche de perçage. Ces outils tournants effectuent les mouvements que l'on fait faire au chariot mobile. Ils possèdent une orientation que l'on peut régler en faisant pivoter le système de support d'outil à entraînement intégré par rapport au chariot mobile. Grâce à cela, certaines formes ayant des orientations particulières ou d'autres spécificités peuvent être réalisées.

Dans l'équipement additionnel décrit ci-dessus, chaque outil est porté par un dispositif rotatif qui est une partie constitutive et permanente du système de support d'outil à entraînement intégré. L'équipement additionnel décrit ci-dessus offre des possibilités d'usinage qui sont figées dès le départ, en se limitant au perçage et au fraisage, le perçage et le fraisage ayant comme principe commun la rotation d'un outil sur son axe.

L'équipement additionnel décrit ci-dessus n'est pas le seul connu. En particulier, on connait également des dispositifs à mouvement hélicoïdal qui permettent de réaliser des filetages internes ou externes et qui sont appelés tourbillonneurs. Les opérations d'usinage au moyen de ces dispositifs nécessitent des réglages manuels préalables, qui sont longs et compliqués à réaliser. Le même inconvénient se rencontre encore sur un autre type d'équipement additionnel, à savoir les dispositifs de polygonage qui servent à réaliser des tronçons à section polygonale.

### Résumé de l'invention

L'invention a au moins pour but de permettre qu'un tour offre plus de possibilités d'usinage ne nécessitant que des opérations préalables (réglage ou autre) qui sont simples à effectuer.

Selon l'invention, ce but est atteint grâce à un équipement pour tour d'usinage à commande numérique. Cet équipement comporte un chariot mobile, un système de support d'outil à entraînement intégré qui est monté à pivotement sur ce chariot mobile de manière à pouvoir pivoter autour d'un axe de pivotement, ainsi qu'un dispositif d'actionnement à même de faire pivoter le système de support d'outil à entraînement intégré par rapport au chariot mobile, autour de l'axe de pivotement. Le système de support d'outil à entraînement intégré comporte au moins un emplacement de montage pour recevoir de manière amovible au moins un accessoire amovible de support et d'entraînement d'un outil.

Divers types d'accessoires amovibles peuvent être installés au niveau de l'emplacement de montage. Par exemple, l'accessoire amovible peut être un tourbillonneur. Une fois ce tourbillonneur installé sur le système de support d'outil à entraînement intégré de l'équipement selon l'invention, ses déplacements, son orientation et son fonctionnement sont pilotés de manière automatisée par le calculateur du tour d'usinage à commande numérique. Divers types d'accessoires amovibles peuvent donc bénéficier d'un réglage automatisé et d'un pilotage automatisé.

Un tour équipé d'un équipement selon l'invention présente en outre l'avantage de posséder une grande polyvalence. Cette grande polyvalence peut ne pas s'accompagner d'un encombrement accru de l'espace à l'intérieur de la cabine du tour puisque l'invention rend possible qu'il n'y ait pas autant de supports fixés au bâti du tour que d'accessoires d'usinage pouvant être utilisés.

La grande polyvalence procurée par l'invention peut également ne pas s'accompagner d'une complexification excessive du tour d'usinage lui-même, puisque ce tour peut mettre en oeuvre plus d'appareils qu'il n'en n'intègre. Par exemple, le tour muni de l'invention peut mettre en oeuvre un appareil de polygonage puis un tourbillonneur, sans être équipé à la fois de l'un et de l'autre de manière permanente.

L'équipement défini ci-dessus peut incorporer une ou plusieurs autres caractéristiques avantageuses, isolément ou en combinaison, en particulier parmi celles définies ci-après.

Avantageusement, le système de support d'outil à entraînement intégré comporte des moyens permettant une fixation rapide, au niveau de l'emplacement de montage, de l'accessoire amovible.

Avantageusement, l'équipement comporte un dispositif permanent d'entraînement comprenant des moyens de mise en prise permettant d'établir une liaison cinématique pour communiquer un entraînement de ce dispositif permanent d'entraînement à l'accessoire amovible. Lorsque tel est le cas, l'accessoire amovible peut ne pas posséder sa propre motorisation, ce qui peut se traduire par une simplification notamment du câblage électrique, un coût moindre, un gain de poids et/ou un gain de place.

Avantageusement, les moyens de mise en prise comprennent une denture circulaire d'engrènement d'une denture complémentaire équipant un organe rotatif d'entrée de l'accessoire amovible. Lors de l'installation de l'accessoire amovible, la mise en prise des dentures complémentaires se fait pratiquement d'elle-même et d'une manière fiable, ce qui est avantageux en termes d'ergonomie du montage.

Avantageusement, l'équipement comporte au moins un sous-ensemble permanent de support et d'entraînement d'un outil.

Avantageusement, le dispositif permanent d'entraînement comporte un mécanisme de transmission de l'entraînement jusqu'à l'accessoire amovible, ce mécanisme de transmission comprenant une partie rotative constitutive du sous-ensemble permanent de support et d'entraînement d'un outil. Lorsque tel est le cas, la transmission d'un même entraînement à la fois à l'accessoire amovible et au sous-ensemble permanent de support et d'entraînement d'un outil peut être obtenue au moyen d'un mécanisme de transmission plus simple.

Avantageusement, l'équipement est pourvu de l'accessoire amovible, qui est fixé de manière amovible au niveau de l'emplacement de montage.

Avantageusement, l'accessoire amovible est choisi parmi un accessoire de perçage ou de fraisage, un accessoire de filetage à mouvement hélicoïdal et un accessoire de polygonage.

L'invention a également pour objet un ensemble pour tour d'usinage à commande numérique, qui comprend un équipement tel que défini précédemment, ainsi qu'un jeu de plusieurs accessoires interchangeables dont chacun est à même d'être fixé au niveau de l'emplacement de montage et constitue un accessoire amovible de support et d'entraînement d'un outil.

L'invention a encore pour objet un tour d'usinage à commande numérique, qui comprend un équipement tel que défini précédemment.

Avantageusement, le tour d'usinage comporte une broche de maintien et d'entraînement d'une matière à usiner, cette broche étant rotative sur un axe de rotation, le chariot mobile constitutif de l'équipement étant déplaçable selon deux directions de translation non parallèles à l'axe de rotation de la broche, l'axe de pivotement du système de support d'outil à entraînement intégré étant non parallèle à l'axe de rotation de la broche.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1a est une vue en perspective d'un tour à commande numérique conforme à l'invention,
- la figure 1b est une vue de dessus et en coupe selon un plan horizontal, et représente le même tour que la figure 1a, un système de support d'outil à entraînement intégré de ce tour ayant une position qui diffère entre les figures 1a et 1b,
- la figure 2 est une vue en perspective, partiellement éclatée, de la majeure partie d'un équipement qui est conforme à l'invention et dont est pourvu le tour de la figure 1,
- la figure 3 est une vue en perspective qui représente l'équipement de la figure 2 dans le cas où un accessoire amovible, à savoir un tourbillonneur, est monté de manière amovible sur cet équipement,
- la figure 4 est une vue latérale, avec arrachement, et, comme la figure 3, représente l'équipement de la figure 2 pourvu du tourbillonneur, et
- la figure 5 est une vue partielle, en perspective, qui représente un accessoire amovible de perçage et/ou de fraisage tel que monté de manière amovible à la place du tourbillonneur, sur un système de support d'outil à entraînement intégré constitutif de l'équipement de la figure 2 et symbolisé en trait mixte.

### Description d'un mode préférentiel de l'invention

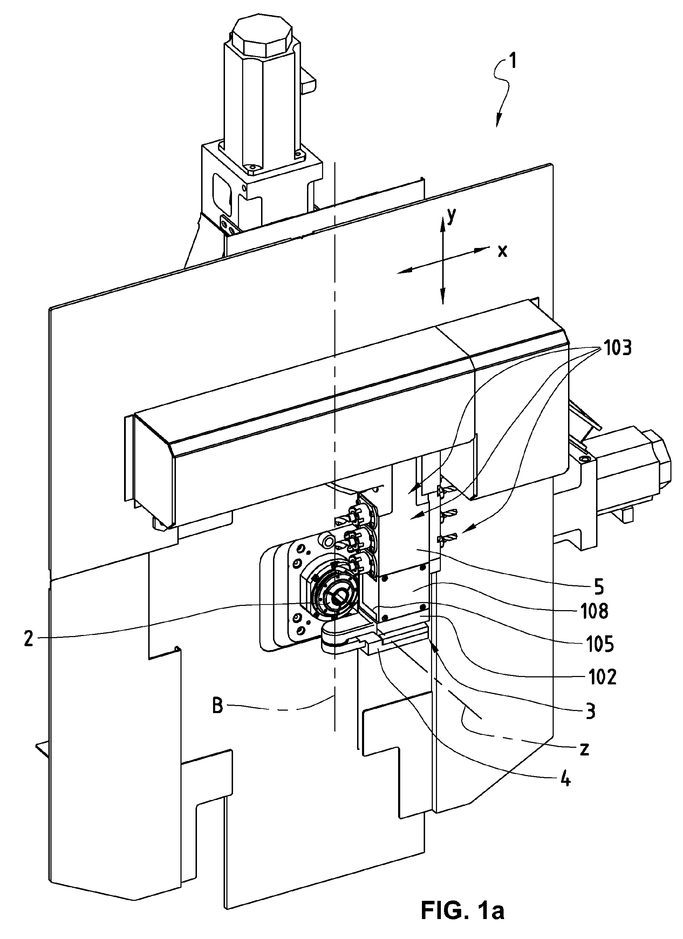

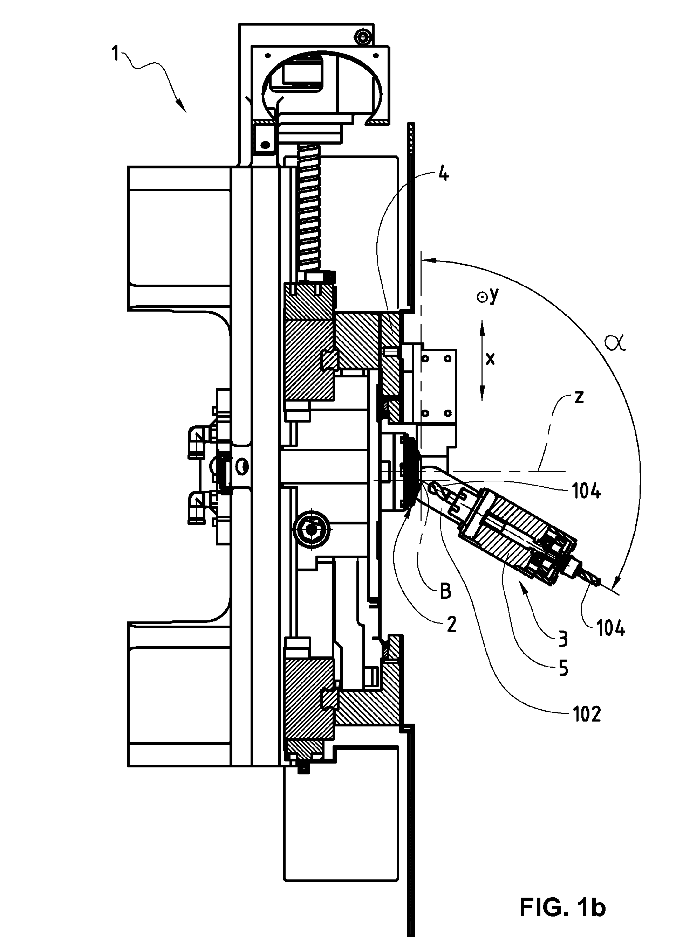

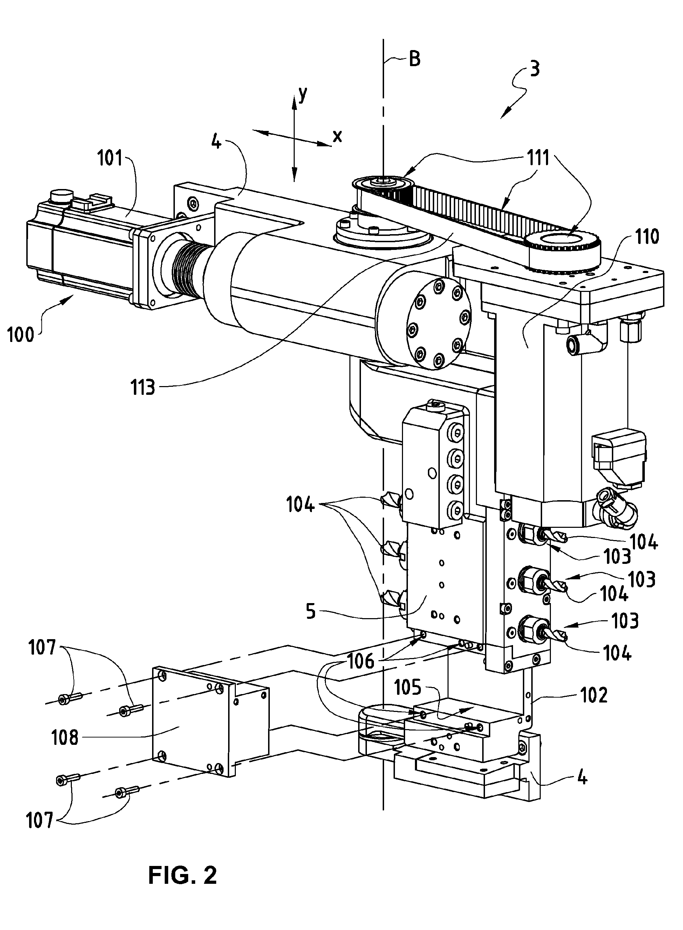

Sur la figure 1 comme sur la figure 2, seulement certaines parties constitutives d'un tour à commande numérique 1 conforme à l'invention sont représentées, les parties non représentées de ce tour 1 étant connues en elles-mêmes. Le tour 1 comporte une broche rotative 2, dont l'axe de rotation est référencé Z et qui est prévu pour supporter et entraîner en rotation une matière à usiner non représentée.

Le tour 1 comporte également un équipement 3, qui est conforme à l'invention tout en étant du type des équipements appelés « axe B ». L'équipement 3 comporte un chariot mobile 4 qui est déplaçable dans un plan vertical, selon deux directions de translation perpendiculaires, à savoir une direction de translation horizontale X et une direction de translation verticale Y. Le guidage et le déplacement du chariot mobile 4 selon les directions de translation X et Y sont effectués par des dispositifs bien connus de l'homme du métier. Lorsque le chariot mobile 4 est également déplaçable selon une direction de translation parallèle à l'axe de rotation Z, son guidage et son déplacement parallèlement à cet axe de rotation Z peuvent eux aussi être effectués par des dispositifs bien connus de l'homme du métier.

Sur la figure 2, l'équipement 3 est représenté seul et sans une partie de son chariot mobile 4. Ce chariot mobile 4 porte plusieurs sous-ensembles, dont un système de support d'outil à entraînement intégré 5 qui pivote sur un axe de pivotement vertical B, par rapport au chariot mobile. Un dispositif 100 d'actionnement du système de support d'outil à entraînement intégré 5 par rapport au chariot mobile 4 comporte un moteur 101, ainsi qu'un mécanisme à roue et vis sans fin masqué par un carter sur les dessins annexés. Ce dispositif d'actionnement 100 est à même d'effectuer un positionnement du système de support d'outil à entraînement intégré 5 dans n'importe laquelle, au choix, de plusieurs positions de travail décalées angulairement les unes des autres autour de l'axe de pivotement B.

Le système de support d'outil à entraînement intégré 5 comporte un bras coudé 102, dans une portion verticale duquel se succèdent trois sous-ensembles permanents 103 qui sont identiques entre eux et dont chacun est plus précisément un sous-ensemble 103 de support et d'entraînement d'un ou de deux outils rotatifs 104. Dans l'exemple représenté, chaque outil rotatif 104 est une mèche de perçage. Toutefois, au moins une partie des outils rotatifs 104 peuvent ne pas être des mèches de perçage, mais être d'un autre type. Par exemple, n'importe lequel des outils rotatifs 104 peut être une fraise.

A la suite et en-dessous des sous-ensembles permanents de support et d'entraînement 103, le bras coudé 102 du système de support d'outil à entraînement intégré 5 comporte un emplacement de montage 105, qui est prévu pour recevoir de manière amovible un accessoire amovible de support et d'entraînement d'un outil. Dans l'exemple représenté, l'emplacement de montage 105 présente la forme d'un logement et ce logement est ouvert latéralement pour la mise en place et le retrait de l'accessoire amovible. Autour de l'emplacement de montage 105, plusieurs trous filetés 106 forment des moyens permettant une fixation rapide de l'accessoire amovible. Chacun d'eux est destiné à recevoir une vis 107 de fixation par serrage de l'accessoire amovible sur le système de support d'outil à entraînement intégré 5. Les trous filetés 106 et les vis 107 peuvent être remplacés ou complétés par d'autres moyens de fixation rapide, tels que des moyens de fixation procédant par encliquetage.

Lorsqu'aucun accessoire amovible n'équipe le système de support d'outil à entraînement intégré 5, une pièce de protection 108 peut être installée provisoirement de manière à fermer et/ou remplir l'emplacement de montage 105.

Toujours sur la figure 2, le chariot mobile 4 porte un moteur d'entraînement 110, qui fait partie d'un dispositif permanent 111 d'entraînement des outils rotatifs 104. Outre le moteur d'entraînement 110, le dispositif permanent d'entraînement 111 comprend un mécanisme de transmission 112, dont une courroie de transmission 113 est visible à la figure 2.

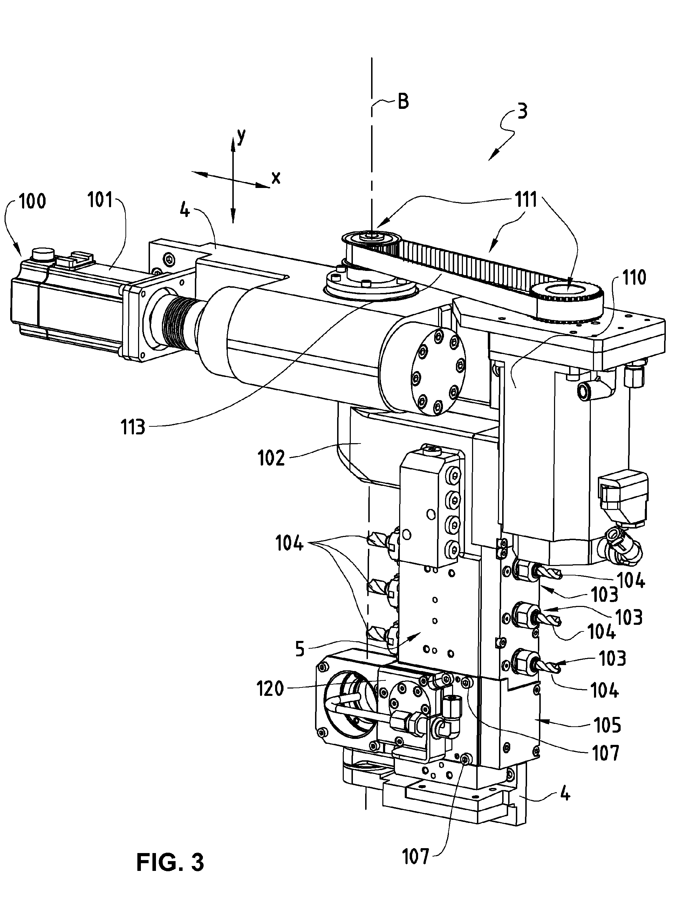

Sur la figure 3, l'emplacement de montage 105 est occupé par un tourbillonneur 120, qui est un accessoire amovible d'usinage à mouvement hélicoïdal permettant de réaliser des filetages internes ou externes. Le principe de fonctionnement d'un tourbillonneur est connu en soi, si bien qu'il n'est pas décrit ici dans un souci de simplicité. Etant amovible, le tourbillonneur 120 peut être remplacé par un autre accessoire amovible. En effet, il fait partie d'un jeu de plusieurs accessoires interchangeables, dont chacun peut être fixé au niveau de l'emplacement de montage 105. Outre le tourbillonneur 120, ce jeu peut comprendre d'autres tourbillonneurs, un ou plusieurs accessoires de perçage, un ou plusieurs accessoires de fraisage et un ou plusieurs accessoires de polygonage.

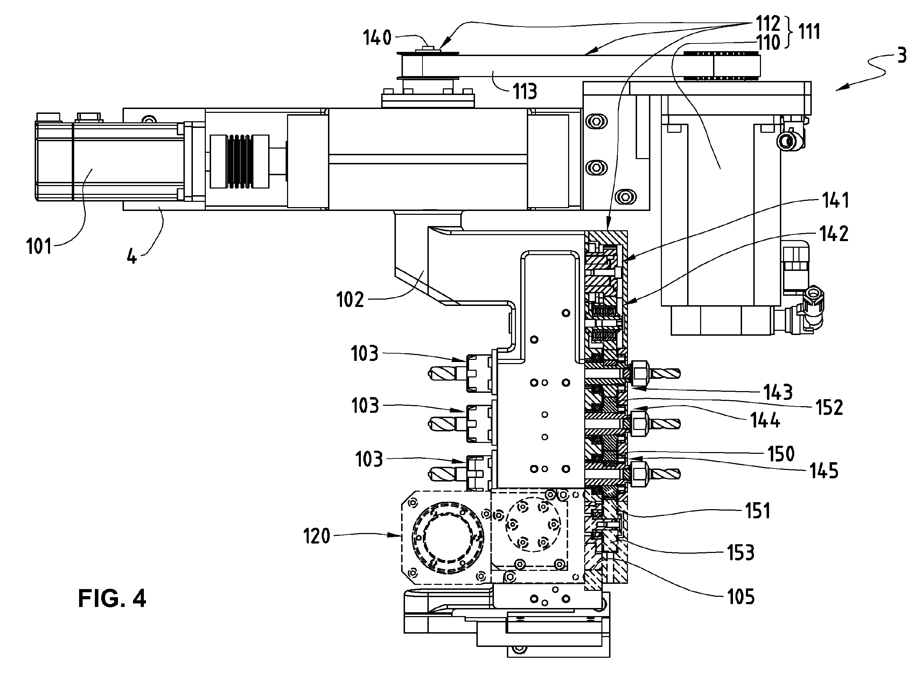

Sur la figure 4, le mécanisme de transmission 112 comporte une succession d'unités rotatives 140, 141, 142, 143, 144, 145 qui engrènent les unes avec les autres, la courroie de transmission 113 accouplant l'unité rotative 140 au moteur d'entraînement 110. Chacune des unités rotatives 143, 144 et 145 présente la particularité de constituer la partie rotative d'un sous-ensemble permanent de support et d'entraînement 103. L'unité rotative 145 se trouve au bout du mécanisme de transmission 112 et il comporte une roue dentée 150 dont la denture circulaire 151 engrène à la fois avec une roue dentée 152 de l'unité rotative 144 et une roue dentée 153 formant un organe rotatif d'entrée du tourbillonneur 120. L'entraînement produit par le moteur d'entraînement 110 est un entraînement commun qui est transmis à l'ensemble des sous-ensembles permanents de support et d'entraînement 103, ainsi qu'à l'accessoire amovible 120. La transmission de cet entraînement jusqu'à l'accessoire amovible 120 se fait via les sous-ensembles permanents de support et d'entraînement 103.

Lorsque le tourbillonneur 120 est retiré, la roue dentée 153 se dégage sans difficulté de la denture circulaire 151. Dans le sens inverse, lors de l'installation du tourbillonneur 120 sur le système de support d'outil à entraînement intégré 5, l'engrènement de la roue dentée 153 avec la roue dentée 150 se met en place sans difficulté. La denture circulaire 151 forme donc des moyens de mise en prise permettant d'établir aisément une liaison cinématique pour communiquer un entraînement entre le mécanisme de transmission 112 et le tourbillonneur 120.

Le calculateur du tour à commande numérique 1 pilote l'équipement 3, en particulier le moteur 101 et le moteur d'entraînement 110.

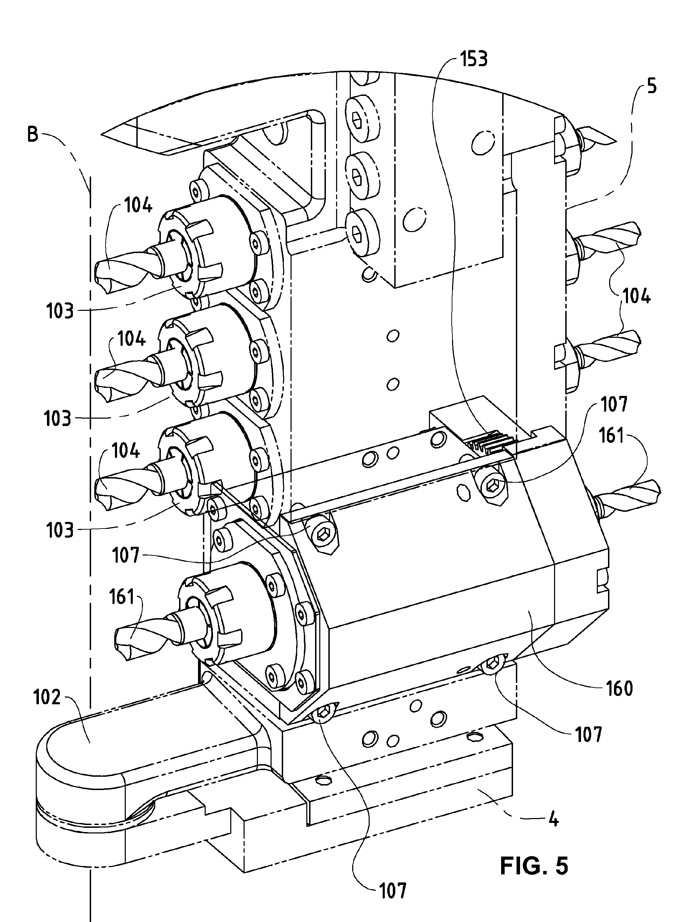

Sur la figure 5, seule une portion inférieure du système de support d'outil à entraînement intégré 5 est représentée, en l'étant en traits mixtes. Elle est plus précisément symbolisée par ses arêtes extérieures normalement visibles depuis le point d'observation choisi pour la réalisation de la figure 5. Sur cette figure 5, l'emplacement de montage 105 est occupé par un accessoire amovible 160 qui remplace le tourbillonneur 120 et qui est plus précisément un accessoire de support et d'entraînement de deux mèches de perçage 161 pouvant chacune être remplacée par une fraise. L'accessoire amovible 160 est entièrement visible à la figure 5, y compris à travers le système de support d'outil à entraînement intégré 5 qui est représenté comme s'il était transparent.

L'axe de pivotement B est sensiblement orthogonal à l'axe de rotation Z de la broche rotative 2. Sur la figure 2, l'arc α symbolise la plage angulaire sur laquelle se succèdent les positions de travail pouvant être occupées par le système de support d'outil à entraînement intégré 5. Moyennant un pivotement de ce système de support d'outil à entraînement intégré 5 autour de l'axe B, l'orientation des outils rotatifs 104 et de l'accessoire amovible 120 ou 160 présent sur le système de support d'outil à entraînement intégré 5 peut être modifiée par rapport à la matière en cours d'usinage tenue par la broche rotative 2. A partir des données qu'un opérateur a entré dans l'unité de commande à calculateur du tour 1, le réglage de la position du tourbillonneur 120 ou d'un autre accessoire amovible monté de manière amovible sur le système de support d'outil à entraînement intégré 5 est effectué de manière automatisée et non manuellement, ce qui peut se traduire par des gains de temps, des gains en efficacité et/ou des gains en précision.

La position angulaire du système de support d'outil à entraînement intégré 5 par rapport au chariot mobile 4 peut être réglée avant une opération d'usinage, puis être fixe pendant cette opération d'usinage. Selon un autre fonctionnement, le système de support d'outil à entraînement intégré 5 peut être actionné selon un mouvement de pivotement autour de l'axe B pendant une opération d'usinage, ce mouvement de pivotement pouvant en outre être combiné à d'autres mouvements tels que des mouvements de translation du chariot mobile 4 parallèlement à l'axe de translation X et/ou à l'axe de translation Y et/ou à l'axe de rotation Z.

## Revendications

1. Equipement pour tour d'usinage à commande numérique (1), cet équipement comportant un chariot mobile (4), un système de support d'outil à entraînement intégré (5) qui est monté à pivotement sur ce chariot mobile (4) de manière à pouvoir pivoter autour d'un axe de pivotement (B), ainsi qu'un dispositif (100) d'actionnement à même de faire pivoter le système de support d'outil à entraînement intégré (5) par rapport au chariot mobile (4), autour de l'axe de pivotement (B), **caractérisé en ce que** le système de support d'outil à entraînement intégré (5) comporte au moins un emplacement de montage (105) pour recevoir de manière amovible au moins un accessoire amovible (120, 160) de support et d'entraînement d'un outil (161).

2. Equipement selon la revendication 1, **caractérisé en ce que** le système de support d'outil à entraînement intégré (5) comporte des moyens (106) permettant une fixation rapide, au niveau de l'emplacement de montage (105), de l'accessoire amovible (120, 160).

3. Equipement selon l'une quelconque des revendications précédentes, **caractérisé en ce qu'**il comporte un dispositif permanent d'entraînement (111) comprenant des moyens de mise en prise (150, 151) permettant d'établir une liaison cinématique pour communiquer un entraînement de ce dispositif permanent d'entraînement (111) à l'accessoire amovible (120, 160).

4. Equipement selon la revendication 3, **caractérisé en ce que** les moyens de mise en prise comprennent une denture circulaire (151) d'engrènement d'une denture complémentaire équipant un organe rotatif d'entrée (153) de l'accessoire amovible (120, 160).

5. Equipement selon l'une quelconque des revendications précédentes, **caractérisé en ce qu'**il comporte au moins un sous-ensemble permanent (103) de support et d'entraînement d'un outil (104).

6. Equipement selon la revendication 5 et l'une quelconque des revendications 3 et 4, **caractérisé en ce que** le dispositif permanent d'entraînement (111) comporte un mécanisme de transmission (112) de l'entraînement jusqu'à l'accessoire amovible (120, 160), ce mécanisme de transmission (112) comprenant une partie rotative (143, 144, 145) constitutive du sous-ensemble permanent (103) de support et d'entraînement d'un outil (104).

7. Equipement selon l'une quelconque des revendications précédentes, **caractérisé en ce qu'**il est pourvu de l'accessoire amovible (120, 160), qui est fixé de manière amovible au niveau de l'emplacement de montage (105).

8. Equipement selon la revendication 7, **caractérisé en ce que** l'accessoire amovible (120, 160) est choisi parmi un accessoire de perçage ou de fraisage (160), un accessoire de filetage à mouvement hélicoïdal (120) et un accessoire de polygonage.

9. Ensemble pour tour d'usinage à commande numérique (1), **caractérisé en ce qu'**il comprend un équipement (3) selon l'une quelconque des revendications précédentes, ainsi qu'un jeu de plusieurs accessoires interchangeables (120, 160) dont chacun est à même d'être fixé au niveau de l'emplacement de montage (105) et constitue un accessoire amovible (120, 160) de support et d'entraînement d'un outil (161).

10. Tour d'usinage à commande numérique, **caractérisé en ce qu'**il comprend un équipement (3) selon l'une quelconque des revendications 1 à 8.

11. Tour d'usinage selon la revendication 10, **caractérisé en ce qu'**il comporte une broche (2) de maintien et d'entraînement d'une matière à usiner, cette broche (2) étant rotative sur un axe de rotation (Z), le chariot mobile (4) constitutif de l'équipement (3) étant déplaçable selon deux directions de translation (X, Y) non parallèles à l'axe de rotation (Z) de la broche (2), l'axe de pivotement (B) du système de support d'outil à entraînement intégré (5) étant non parallèle à l'axe de rotation (Z) de la broche (2).
